# EUROPÄISCHE PATENTSCHRIFT

(11) **EP 2 934 365 B1**
(45) Veröffentlichungstag und Bekanntmachung des Hinweises auf die Patenterteilung: **13.03.2019**
(21) Anmeldenummer: 13821099.2
(22) Anmeldetag: 20.12.2013
(51) Int. Cl.: A61C 7/00, A61C 9/00, A61C 13/00

(54) **VERFAHREN ZUR HERSTELLUNG EINES KIEFERORTHOPÄDISCHEN SETUPS**
METHOD FOR PRODUCING AN ORTHODONTIC SETUP
PROCÉDÉ DE FABRICATION D'UN APPAREIL ORTHODONTIQUE

(30) Priorität: 21.12.2012 DE 102012113025; 13.09.2013 GB 201316297
(43) Veröffentlichungstag der Anmeldung: 28.10.2015
(73) Patentinhaber: Ortho Caps GmbH, 59069 Hamm (DE)
(72) Erfinder: KHAN, Wajeeh, 59069 Hamm (DE)
(74) Vertreter: Michalski Hüttermann & Partner Patentanwälte mbB
(86) Internationale Anmeldenummer: PCT/EP2013/077647
(87) Internationale Veröffentlichungsnummer: WO 2014/096341

(56) Entgegenhaltungen:
- WO-A2-2006/118771
- US-A1- 2006 127 859

## Beschreibung

Aligner sind patientenangepasste kieferorthopädische Vorrichtungen, die gewöhnlich aus einem durchsichtigem Kunststoff bestehen, und alternativ zur traditionellen Metallzahnspange für die Ausrichtung und Begradigung von Zähnen benutzt werden. Wie Zahnspangen helfen sie, die Zahnstellungen einer Person in Bezug auf deren Biss auszugleichen und dadurch kieferorthopädische Fehlstellungen, wie Fehlokklusionen, zu beseitigen.

Herkömmliche Verfahren zur Herstellung von Alignern basieren auf dem Tiefziehen geeigneter Folien über einem sogenannten kieferothopädischen Setup. Letzteres besteht in der Regel aus einem Gipsmodell oder einem mittels 3D-Drucken hergestellten Modell, das den Istzustand, den Sollzustand oder einen Übergangszustand des gesamten Ober- oder Unterkiefers bestehend aus Alveolarkamm nebst Zähnen darstellt.

Diese herkömmliche Methode ist mit einer Vielzahl von Nachteilen behaftet. So ermöglicht sie in aller Regel nur die Herstellung von Alignern minderer optischer Güte. Außerdem weist sie einen sehr hohen Materialverbrauch auf und ist darüber hinaus zeitaufwendig.

Es ist daher eine Aufgabe der vorliegenden Erfindung, Verfahren bzw. Vorrichtungen bereitzustellen, die die genannten Nachteile beseitigen.

Es ist eine weitere Aufgabe der vorliegenden Erfindung, Verfahren bzw. Vorrichtungen bereitzustellen, die die Herstellung von Alignern mit einer hohen optischen Güte ermöglichen.

Es ist eine weitere Aufgabe der vorliegenden Erfindung, Verfahren bzw. Vorrichtungen bereitzustellen, die die kostengünstige und/oder ressourcenschonende Herstellung von Alignern ermöglichen.

Es ist eine weitere Aufgabe der vorliegenden Erfindung, Verfahren bzw. Vorrichtungen bereitzustellen, die die Herstellung von Alignern ermöglichen, die eine geringe Reizungs- oder Verletzungsgefahr für das Zahnfleisch aufweisen.

Diese Aufgaben werden durch die Verfahren bzw. Vorrichtungen gemäß der unabhängigen Ansprüche der aktuellen Erfindung erfüllt. Die abhängigen Ansprüche beschreiben bevorzugte Ausführungsformen. Wertebereiche die durch numerische Werte begrenzt sind, sollen stets die besagten Grenzwerte beinhalten.

### Zusammenfassung der Erfindung

Bevor die Erfindung im Detail beschrieben wird, wird darauf hingewiesen, dass diese Erfindung nicht begrenzt ist auf bestimmte Bestandteile der beschriebenen Vorrichtungen, oder beschrieben Herstellungsschritte der Verfahren, da diese Verfahren bzw. Vorrichtungen variieren können. Es wird auch darauf hingewiesen, dass die Terminologie hierfür nur zum Zweck für bestimmte beschriebene Ausführungsformen benutzt wird, und nicht absichtlich begrenzt ist.

Es soll angemerkt werden, dass in der verwendeten Beschreibung und in den anhängenden Ansprüchen die einfache Form wie "ein/eine" oder "der/die/das" einen singulären und/oder pluralen Gegenstand beinhaltet, außer wenn es im Kontext klar anders formuliert ist. Außerdem ist zu vereinbaren, dass für den Fall, dass ein Parameterbereich angegeben wurde, die begrenzenden Zahlenwerte als Grenzwerte zum Zahlenbereich dazu gelten.

Der Begriff "Aligner" wie her verwendet, wird synonym mit den Begriffen "Retainer", "Positioner" und "Splint" verwendet. Zwar wird in der Literatur zuweilen zwischen Alignern und Retainern unterschieden, dergestalt, dass Aligner eine aktive Änderung der Zahnstellung herbeiführen sollen, während Retainer lediglich eine auf anderem Wege herbeigeführte Änderung der Zahnstellung fixieren oder etablieren sollen, allerdings wird diese Unterscheidung in der Literatur nicht konsequent durchgesetzt. Letztlich macht es auch keinen Unterschied, ob eine Kunststoffschiene Kräfte in einen Zahn einleitet, um seine Position aktiv zu ändern oder nur zu fixieren.

Erfindungsgemäß ist ein Verfahren zur Herstellung eines kieferorthopädischen Setups vorgesehen, aufweisend das
a) Herstellen mindestens eines physischen Alevolarkamm-Modells, wobei besagtes Alevolarkamm-Modell Kavitäten für die Aufnahme von Zahnmodellen aufweist,
b) Herstellen von Zahnmodellen, und
c) optional: Platzieren der Zahnmodelle in besagtem Alevolarkamm-Modell.

Wobei erfindungsgemäß das Alveolarkamm-Modell (11) weiterhin mindestens eine durchgängige Ausnehmung aufweist. Bevorzugt weist das Alveolarkamm-Modell (11) eine Vielzahl an durchgängigen Ausnehmungen (15) auf.

Diese Ausnehmungen (15) können als hauptsächlich schlitz- oder langlochförmige Ausnehmung (15), bevorzugt unterhalb einer Kavität (12) eingebracht werden. In einer bevorzugten Ausgestaltung der Erfindung weist das Alveolarkamm-Modell mindestens 1, oder einer Vielzahl, d.h. 2, 3, 4, 5, 6, 7, 8, 9, 10, 11, 12, 13, 14, 15, 16, 17, 18, 19 oder 20 oder mehr durchgängige Ausnehmungen auf. Die Anzahl und der Durchmesser der Ausnehmungen ist nicht beschränkt auf eine bestimmte Größe bzw. Anzahl, solange der Luftaustausch von der Ober- zu der Unterseite des Alveolarkamm-Modells gewährleistet ist. Bevorzugt weist jedoch die Ausnehmung einen Durchmesser von 0.01, 0.02, 0.03, 0.04, 0.05, 0.06, 0.07, 0.08, 0.09, 0.1, 0.2, 0.3, 0.4 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9 oder 4.0 oder mehr mm auf.

Erfindungsgemäß wird der Alveolarkamm aus einem langlebigen, nicht porösem Kunststoffmaterial hergestellt. Dies hat den Vorteil, dass das physische Alveolarkamm-Modell widerstandfähig ist und mehrfach verwendet werden kann. Somit kann, ohne dass ein erneuter manueller oder digitaler Abdruck von dem Pateinten genommen werden muss, beispielsweise nochmals der gleiche Aligner an dem erfindungsgemäßen Alveolarkamm-Modell hergestellt werden. Dies ist ein großer Vorteil gegenüber den gängigen Verfahren des Stand der Technik, in denen Gibs-Abgussmodelle diesbezüglich verwendet werden und häufig durch das Tiefziehen beschädigt und somit nicht mehr verwendbar sind.

Auf Grund der fehlenden Porosität des Kunstsoffmaterials kann jedoch die Luft beim Tiefzeihen nicht durch den Kunststoff entweichen, wodurch sich die Folie während des Tiefziehverfahrens nicht passgenau an den physischen Zahn-und/oder das Alveolarkamm-Modell anschmiegen kann bzw. ohne dass Lufteinschließungen auftreten. Der Erfinder der vorliegenden Erfindung hat überraschenderweise entdeckt, dass durch die Einbringen von schlitz- und/oder langlochförmigen, durchgängigen Ausnehmungen in das physische Alveolarkamm-Modell, ein Aligner mittels konventionellen Druck- und/oder Vakuum Tiefziehverfahren hergestellt werden kann, der die Zahnmodelle nebst dem Alveolarkamm-Modell passgenau umschließt. Bevorzugt werden die Ausnehmungen an dem Alveolarkamm-Modell angebracht und bilden vorzugsweise eine Verlängerung der Kavitäten, sodass der Luftaustausch gewährleistet wird. Auch eine seitliche Anbringung der Ausnehmung ist möglich. In der einfachsten Ausführungsform werden die Ausnehmungen durch nachträgliches Bohren in das Modell eingebracht. Ebenfalls können die Ausnehmungen bereits am digitalen Setup Modell berechnet und angelegt werden.

Bei besagtem Alveolarkamm-Modell handelt es sich erfindungsgemäß um ein Positivmodell eines Ober- und/oder Unterkiefers mit Zahnfleisch, das darüber hinaus Kavitäten aufweist, die in etwa den Zahnfächern ("Sockets") entsprechen.

Der Begriff "kieferorthopädisches Setup" bezeichnet ein physisches Modell eines Ober- und/oder Unterkiefers aufweisend die Zähne sowie den Alveolarkamm. Dabei kann das Setup sowohl den Ist-Zustand eines Patienten als auch einen Anfangs-, Übergangs- oder End-Korrekturzustand einer geplanten oder durchgeführten kieferorthopädischen Therapie darstellen.

Kieferorthopädische Setups werden beispielsweise für das Herstellen von Alignern benötigt, können aber auch für die Herstellung oder Modellage von herkömmlichen Zahnspangen oder Brackets verwendet werden, oder für die Diagnostik, beispielsweise um die Machbarkeit/Durchführbarkeit einer Behandlung zu überprüfen.

Gegenüber der aus der EP1876990 oder der US 2006/0127859 bekannten "Lochplatte ("dental base"), in welche Zahnmodelle gesteckt werden können, um anschließend an diesem Modell per Tiefziehen einen Aligner herzustellen, hat das erfindungsgemäße Verfahren den Vorteil, dass der Übergang zwischen Zahnfleisch und Zahnhals durch Zusammenspiel eines originalgetreuen Alevolarkamm-Modells und den Zahnmodellen vorbildgetreu modelliert ist. Die an einem solchen Setup hergestellten Aligner weisen daher anatomisch ausgeformte Ränder und damit eine geringe Reizungs- oder Verletzungsgefahr insbesondere für das Zahnfleisch auf - anders als bei den erwähnten Lochplatten. Darüber hinaus muss auch das Zahnfleisch nicht anschließend noch in Wachs modelliert werden, was dazu führen würde, dass man besagtes Wachsmodell duplieren (negativ formen) und dann in Gips ausgießen müsste, um später ein Modell für das Tiefziehverfahren zu haben. Daher ist in einer bevorzugten Ausgestaltung der vorliegenden Erfindung das physische Alveolarkamm-Modell als ein Positivmodell eines Ober- und/oder Unterkiefers mit Zahnfleisch ausgestaltet.

Bevorzugt ist ferner vorgesehen, dass die Zahnmodelle
a) numerisch, alphabetisch oder mithilfe eines computerlesbaren Codes markiert sind, und/oder
b) einen physischen Orientierungsmarker beispielsweise in Form einer Nut oder einer Feder (mit jeweils einem korrespondierenden Orientierungsmarker in den Kavitäten des Alveolarkamms)
aufweisen, um eine reproduzierbare Anordnung in dem Alveolarkamm-Modell bzw. in den verschiedenen Alveolarkamm-Modellen zu gewährleisten.

Bevorzugt ist dabei vorgesehen, dass die Zahnmodelle neben einer Zahnkrone einen Zahnhals sowie eine - ggf. vereinfacht ausgeführte - Zahnwurzel aufweisen.

Im einfachsten Falle kann die Zahnwurzel als ein einfacher Stift, Zylinder oder Kegelstumpf ausgeführt sein. Im kompliziertesten Falle entspricht die Zahnwurzel in Ihrer Form exakt der natürlichen Zahnwurzel des entsprechenden Zahns.

Weiterhin bevorzugt ist die Zahnwurzel derart ausgestaltet, dass diese nicht bündig mit der Unterseite des Alveolarkamm-Modells abschließt.

Im oben geschilderten einfachsten Fall dienen die so hergestellten vereinfacht ausgeführten Zahnwurzeln lediglich dazu, die Orientierung der Zahnmodelle anhand einer gegebenen Kavität festzulegen, in einem CAD-Modell zu visualisieren und eine Vorhersagbarkeit der Orientierung der Zahnmodelle bei entsprechender Manipulation der betreffenden Kavität im CAD-Modell zu gewährleisten.

Mit abnehmendem Vereinfachungsgrad ermöglichen die Zahnwurzelmodelle jedoch auch noch eine Vorhersage über die Machbarkeit einer etwaigen Korrekturtherapie, da in einem CAD-Modell verschiedene Korrekturzustände simuliert werden und deren Auswirkungen auf die Zahnwurzeln geprüft werden können. So kann etwa vermieden werden, dass in einem geplanten Korrekturzustand die Wurzeln benachbarter Zähne aneinanderstoßen, oder eine Zahnwurzel in Kontakt mit dem Kieferknocken in dem betreffenden Zahnfach tritt.

Bevorzugt ist ferner vorgesehen, dass mindestens eine Kavität in besagtem Alevolarkamm-Modell in ihrer Form und/oder Ausrichtung so ausgestaltet ist, dass sie die Orientierung des betreffenden Zahnmodells in allen sechs Freiheitsgraden bestimmt.

Gemäß dieser Ausführungsform ist also vorgesehen, dass die Form der Kavität dergestalt mit der Form der Wurzel des betreffenden Zahnmodells interagiert, dass sie dessen Orientierung bestimmt. Hierfür ist vorgesehen, dass Kavität und Wurzel des betreffenden Zahnmodells mindestens abschnittsweise formschlüssig miteinander ausgestaltet sind.

Eine Manipulation der Form bzw. Ausrichtung der Kavität bestimmt damit automatisch die die Orientierung des betreffenden Zahnmodells. Auf diese Weise ist einem Therapeuten ein Werkzeug in die Hand gegeben, die Orientierung mehrerer Zahnmodelle in einem kieferorthopädischen Setup zu bestimmen und so einen Aligner herzustellen, der eine vorher bestimmte Korrektur der Zahnstellung bewirken kann

Mit Freiheitsgrad wird die Zahl der frei wählbaren, voneinander unabhängigen Bewegungsmöglichkeiten eines Systems bezeichnet. Ein starrer Körper im Raum hat demnach den Freiheitsgrad, denn man kann den Körper in drei voneinander unabhängige Richtungen bewegen und in drei voneinander unabhängigen Ebenen drehen. In dieser Bedeutung als Gesamtzahl der unabhängigen Bewegungsmöglichkeiten kommt der Begriff Freiheitsgrad nur im Singular vor. Die einzelnen Bewegungsmöglichkeiten werden dann auch Freiheiten genannt. In der Literatur und im allgemeinen Sprachgebrauch wird aber auch jede der unabhängigen Bewegungsmöglichkeiten eines Systems als ein Freiheitsgrad bezeichnet. Ein starrer Körper ohne Bindungen hat demnach sechs Freiheitsgrade.

Bevorzugt ist weiterhin vorgesehen, dass das Verfahren die Herstellung mehrerer Alveolarkamm-Modelle umfasst, die sich voneinander mindestens in der Form und/oder Ausrichtung einer Kavität unterscheiden.

Auf diese Weise lassen sich, nach anschließender Bestückung der Positivmodelle mit den Zahnmodellen, zwei oder mehr Aligner fertigen, die für eine inkrementelle Korrekturtherapie der Zahnstellung Verwendung finden können.

Im Unterscheid zu herkömmlichen Verfahren, bei welchem für die Herstellung mehrerer Aligner jeweils die entsprechende Anzahl an kompletten Setups hergestellt werden muss, ist es erfindungsgemäß nunmehr erforderlich, die entsprechende Anzahl von Alveolarkamm-Modellen herzustellen, da diese jeweils mit denselben Zahnmodellen bestückt werden können. Auf diese Weise wird weniger Material verbraucht, und so eine Zeit- und Kosteneinsparung sowie eine Ressourcenschonung ermöglicht und außerdem unnötiger Müll vermieden.

Besonders bevorzugt ist weiterhin vorgesehen, dass das Verfahren die Herstellung
a) eines Alveolarkamm-Modells, das dem kieferorthopädischen Istzustand oder einem kieferorthopädischen Anfangs-Korrekturzustand entspricht
b) optional eines oder mehrerer Alveolarkamm-Modelle, die einem oder mehreren kieferorthopädische Übergangs-Korrekturzuständen entsprechen, und/oder
c) eines Alveolarkamm-Modells, das einem kieferorthopädischen End-Korrekturzustand entspricht, umfasst.

Die Entsprechung zwischen dem jeweiligen Alveolarkamm-Modell und dem betreffenden kieferorthopädischen Ist- oder Korrekturzustand erfolgt dabei durch die Form und/oder Ausrichtung der jeweiligen Kavitäten, die - wie geschildert - die Orientierung der betreffenden Zahnmodelle in allen sechs Freiheitsgraden bestimmt.

Der Begriff "End-Korrekturzustand" kann dabei sowohl den im Rahmen eines gegebenen Therapieplans zu erzielenden Endzustand bezeichnen - wobei sich an diesen gegebenen Therapieplan weitere Therapiepläne anschließen können (was besagten End-Korrekturzustand zu einer Art vorläufigem Endzustand macht), oder aber den klinisch bzw. ästhetischen wünschenswerten finalen End-Korrekturzustand.

Ferner ist bevorzugt vorgesehen, dass ein Alveolarkamm-Modell hergestellt wird durch
a1) Anfertigen eines 3D-Scans eines Ausgusses, welcher Ausguss anhand einer Abformung des Ober- oder Unterkiefers eines Patienten mit einem geeignetem Material erhalten wird, oder anfertigen eines intraoralen Scans des Ober- oder/und Unterkiefers eines Patienten;
a2) optional separieren von mindestens einem Teil aus dem Abguss und erneutes Anfertigen eines 3D-Scans des mindestens einem Teil des Abgusses,
b) Anfertigen eines virtuellen CAD-Modells des Ist-Zustands des Ober- oder Unterkiefers des Patienten,
   wobei optional die Daten der 3D-Scans von Schritt a1 und a2 zu einem virtuellen CAD-Modell des Ist-Zustands des Ober- oder Unterkiefers des Patienten verrechnet werden, und
c) virtuelles Entfernen der in dem virtuellen CAD-Modell des Ist-Zustands repräsentierten Zähne nebst den dazugehörigen ggf. vereinfacht ausgeführten Zahnwurzeln, wobei in dem so erhaltenen ersten Alveolarkamm-CAD-Modell den entfernten Zahnwurzeln entsprechende Kavitäten generiert werden, und
d) Herstellen eines physischen Alveolarkamm-Modells (11) auf Basis des besagten ersten Alveolarkamm-CAD-Modells mittels einer CAM-Technik.

Weiterhin umfasst das Verfahren im Schritt c) einen Schritt des Einfügens mindestens einer durchgängigen Ausnehmung (15) in das erste Alveolarkamm-CAD-Modell. Erfindungsgemäß kann dieser Schritt auch später, d.h. in ein modifiziertes Alveolarkamm-CAD Modell eines kieferorthopädischen Anfangs-, Übergangs- oder End-Korrekturzustandes eingefügt werden. Ebenfalls können diese Ausnehmungen auch nachträglich in die diesbezüglichen physischen Alveolarkamm-Modelle eingebracht werden.

Für den 3D-Scan können dabei bevorzugt berührungslose Verfahren wie beispielsweise ein optischer Streifenlicht-Scanner, ein Laserscanner, ein FlashCTScanner oder ein Röntgenstrahlscanner verwendet werden.

Im Schritt 1a) kann alternativ zu einem Abscannen des Abgusses auch kein Abguss hergestellt werden, sondern anstatt dessen ein intraoraler Scan mittels digitaler Abdrucksysteme im Mund des Patienten durchgeführt werden. Diesbezüglich wird u.a. eine intraorale dreidimensionale Kamera verwendet, die ein System, das einen Zahn, eine Gruppe von Zähnen oder einen vollständigen Kiefer unter Verwendung eines optischen Systems, das in den Mund eines Patienten eingeführt ist, charakterisieren oder abbilden kann.
Die intraorale Scantechnologie ist dem Fachmann bekannt und diesbezügliche Vorrichtungen und Software werden beispielsweise durch die Firma Straumann und Cadent Inc., vertreiben. Diese digitalen Abdrucksysteme ermöglichen eine direkte Integration von schnellem, präzisem und bequemem Scannen auf dem Behandlungsstuhl und die Integration dieser generierten Daten in den digitalen Arbeitsablauf des erfindungsgemäßen Systems.

Ebenso können auch Kontaktmessverfahren verwendet werden, beispielsweise sondenbasierte Messverfahren, wie sie von der Firma Faro vertrieben werden.

Für die Abformung können bevorzugt die gängigen in der Zahnmedizin verwendeten Abformungsmaterialien verwendet werden, beispielsweise Silikon-, Hydrokolloid-, Polyether- oder Alginatbasierte Materialien.

Für den Ausguss können bevorzugt ebenfalls die in die der Zahnmedizin verwendeten Ausgussmaterialien verwendet werden, beispielsweise Gipsbasierte Materialien.

Schritt a2 zielt insbesondere auf Patienten-Gebisssituationen ab, in denen die Zahnstellungen, beispielsweise durch Zahnengstellung oder Torsion, eines Patienten ungünstig ausgerichtet ist und während eines Scans somit nicht das gesamte Oberflächenprofil eines oder mehrerer Zähne erfasst werden kann. Zu diesem Zweck kann der Abguss mittels gängiger maschineller oder händischer Verfahren in Teilstücke, umfassend einen Zahn nebst Basisteil des Abgusses, separiert werden, und die so separierten Abgussteile, d.h. die mindestens einem Teil aus dem Abguss, erneut eingescannt werden. Anschließend werden die digitalen Informationen der Scans aus Schritt a1 und a2 digital miteinander verrechnet. Dies gewährleistet, dass auch bei anspruchsvollen Zahnfehlstellungen alle Informationen des physikalischen Abgussmodells auch digital vorliegen um qualitativ hochwertige Aligner herstellen zu können.

Im einfachsten Fall existieren keine patientenspezifischen Informationen in Bezug auf die Form und Ausrichtung der betreffenden Zahnwurzeln. Es kann daher mit Dummy-Modellen gearbeitet werden, die in der betreffenden Software hinterlegt sind und zahnspezifisch repräsentative Formen und Ausrichtungen aufweisen. Es kann ebenso mit stark vereinfachten Modellen der Zahnwurzeln gearbeitet werden, beispielsweise einfachen Stiften, Zylindern oder Kegelstümpfen.

Im vorliegenden Zusammenhang bezieht sich der Ausdruck CAM auf das sogenannte Computer Aided Manufacturing, bei welchem ein Computer eine Fertigungsmaschine steuert. CAM-Verfahren umfassen das sogenannte Rapid Prototyping, wie 3D-Plotting, 3D-Photolithographie oder CNC-Fräsen. CAM-Techniken werden in aller Regel mit CAD-Techniken kombiniert (sogenanntes CAD/CAM). CAM-Verfahren umfassen das sogenannte Rapid Prototyping, wie 3D-Plotting, 3D-Photolithographie oder CNC-Fräsen. CAM-Techniken werden in aller Regel mit CAD-Techniken kombiniert (sogenanntes CAD/CAM).

Ferner ist bevorzugt vorgesehen, dass mindestens ein modifiziertes Alveolarkamm-Modell eines kieferorthopädischen Anfangs-, Übergangs- oder End-Korrekturzustands hergestellt wird durch
a1) Virtuelles Manipulieren der Orientierung mindestens eines Zahns in dem virtuellen CAD-Modell des Ist-Zustands, oder in einem modifizierten CAD-Modell eines Anfangs- oder Übergangs-Korrekturzustands, dergestalt, dass nach dem virtuellen Entfernen der in dem virtuellen CAD-Modell repräsentierten Zähne die Orientierung der betreffenden Kavität in dem so erhaltenen modifizierten Alveolarkamm-CAD-Modell geändert ist, oder
a2) Virtuelles Manipulieren der Form und/oder Ausrichtung mindestens einer Kavität in dem ersten Alveolarkamm-CAD-Modell, oder in einem modifizierten Alveolarkamm-CAD-Modell eines Anfangs- oder Übergangs-Korrekturzustands dergestalt, dass durch die Manipulation der Kavität in dem so erhaltenen modifizierten Alveolarkamm-CAD-Modell geändert die Orientierung des betreffenden Zahns geändert ist, und
b) Herstellen eines physischen modifizierten Alveolarkamm-Modells auf Basis des besagten modifizierten Alveolarkamm-CAD-Modells mittels einer CAM-Technik.

Erneut erfolgt die Entsprechung zwischen dem jeweiligen Alveolarkamm-Modell und dem betreffenden kieferorthopädischen Ist- oder Korrekturzustand durch die Form und/oder Ausrichtung der jeweiligen Kavitäten, die - wie geschildert - die Orientierung der betreffenden Zahnmodelle in allen sechs Freiheitsgraden bestimmt.

Die Manipulation der Orientierung mindestens eines Zahns in dem virtuellen CAD-Modell bzw. die Manipulation der Form und/oder Ausrichtung mindestens einer Kavität in dem Alveolarkamm-CAD-Modell erfolgt dabei dergestalt, dass ein kieferorthopädischer Therapieplan nachvollzogen wird, dessen Ziel eine klinisch oder ästhetisch erstrebenswerte Zahnpositionierung ist.

Im Rahmen dessen kann beispielsweise für jeden in seiner Position zu korrigierenden Zahn ein klinisch oder ästhetisch erstrebenswerter kieferorthopädischer End-Korrekturzustand definiert, und die hierfür zu bewerkstelligende Positionsänderung quantifiziert werden. Besagte Positionsänderung wird dann in Teilstrecken unterteilt, auf Basis derer dann die kieferorthopädischen Anfangs- und Übergangskorrekturzustande definiert werden können.

Bevorzugt wird zusätzlich zu dem virtuellen CAD-Modell des Ist-Zustands des Ober- oder Unterkiefer des Patienten
a) mittels bildgebendem Verfahren ein CAD-Modell mindestens einer Zahnwurzel erzeugt und
b) besagtes CAD-Modell dem virtuellen CAD-Modell des Ist-Zustand des Ober- oder Unterkiefers des Patienten hinzugefügt.

Hierfür kommen bevorzugt bildgebende Röntgenverfahren, wie die DVT (Digital Volume Tomography) oder bildgebende 3D Ultraschallverfahren in Frage.

Die Kombinierung beider CAD-Modelle kann mittels geeigneter Software erfolgen, beispielsweise der Software Geomagic.

Auf diese Weise wird Information über die Form und Orientierung der Zahnwurzeln gewonnen, und kann in die weiteren Schritte mit einbezogen werden. Wie bereits erwähnt kann im einfachsten Falle kann in den weiteren verfahren die Zahnwurzel als ein einfacher Kegelstumpf ausgeführt sein. Im kompliziertesten Falle entspricht die Zahnwurzel in Ihrer Form exakt der natürlichen Zahnwurzel des entsprechenden Zahns.

Besonders bevorzugt schließt sich an den Schritt des virtuellen Entfernens der in dem virtuellen CAD-Modell repräsentierten Zähne ein Schritt der Generierung, Überarbeitung und Speicherung mindestens eines Zahn-CAD-Modells eines so entfernten Zahns nebst der dazugehörigen ggf. vereinfacht ausgeführten Zahnwurzel an.

Weiterhin ist bevorzugt vorgesehen, dass das Verfahren ferner aufweisend den Schritt der Herstellung mindestens eines physischen Modells eines Zahns nebst - ggf. vereinfacht ausgeführter - Zahnwurzel auf Basis des besagten Zahn-CAD-Modells mittels einer CAM-Technik.

Bevorzugt ist dabei vorgesehen, dass die für die Herstellung des physischen Modells eines Zahns nebst - ggf. vereinfacht ausgeführter - Zahnwurzel eingesetzte CAM-Technik höher auflösend ist als die für Herstellung der physischen Alveolarkamm-Modelle verwendete CAM-Technik.

Das Auflösungsvermögen von CAM-Techniken wird wie beim normalen Druck in dpi (dots per inch) in XYZ Richtung definiert. Je höher die dpi-Zahl desto höher auflösend ist das Ergebnis. Bei Stereolithographischen Verfahren und beim 3D-Drucken kann die Schichthöhe erhöht werden um den Prozess zu beschleunigen -was die Auflösung in Z-Richtung erniedrigt. Beim CNC-Fräsen ist die Auflösung von der Mimik der Fräsmaschine und der Ausgestaltung des Fräswerkzeuges abhängig.

Tendenziell weisen CNC-Verfahren eine höhere Auflösung auf als Stereolithographische Verfahren, die wiederum tendenziell höher auflösend sind als 3D-Drucken. Im Jahr 2011 galten beispielsweise 3D-Drucksysteme mit einer Auflösung von 600 dpi als hochauflösend. Das Auflösungsvermögen der herkömmlichen CAM-Techniken steigt kontinuierlich mit dem technischen Fortschritt, sodass der Erfindungsgegenstand keineswegs an den genannten Auslösungswerten festgelegt werden soll. Vielmehr geht es um eine relative Einordnung des Begriffs "höher auflösend".

Folglich ist bevorzugt vorgesehen, dass für die Herstellung des physischen Modells eines Zahns nebst - ggf. vereinfacht ausgeführter - Zahnwurzel hochauflösende CNC-Verfahren, hochauflösende Stereolithographische Verfahren oder hochauflösende 3D-Druckverfahrenzum Einsatz kommen. Der Vorteil dieses Ansatzes liegt darin, dass so glattere Oberflächen auf den betreffenden Zahnmodellen erzeugt werden können, was wiederum in optisch hochwertigeren Alignern resultiert, die anschließend per Tiefziehen an dem betreffenden kieferorthopädischen Setup hergestellt werden. Die so hergestellten Aligner weisen nämlich aufgrund der Tatsache, dass die verwendeten Zahnmodelle eine glatter Oberfläche aufweisen, eine geringere Rauigkeit auf und sind daher in ihrer Transparenz herkömmlich hergestellten Alignern überlegen.

In einer bevorzugten Ausführungsform weist zumindest die Zahnkrone (14a) des Zahnmodells (13), eine geringere Rauigkeit, als das Alveolarkamm-Modell (11) auf. In einer weiteren bevorzugten Ausführungsform weist das Alveolarkamm-Modell (11) eine höhere Rauigkeit als die Zahnmodelle, zumindest der Zahnkrone auf.

Die Rauigkeit einer Oberfläche (Oberflächenrauigkeit) kann mittels gängiger Verfahren bestimmt werden. Beispielsweise eignen sich Messgeräte wie das Oberflächen-Messgerät (Perthometer S3P, FeinprüfPerthen GmbH, Göttingen) oder die Konfokalmikroskopie, Konoskopische Holografie, Fokusvariation oder Weißlichtinterferometrie.

Wichtig ist hierbei, dass hochauflösende CAM-Techniken wesentlich zeitaufwendiger sind als niedrigauflösende CAM-Techniken. Daher ist es, um eine Reihe von inkrementellen kieferorthopädischen Setups im Rahmen eines Positionskorrekturplans herzustellen, nicht wirtschaftlich, diese Setups durchgängig mit hochauflösenden CAM-Techniken herzustellen.

Für die Herstellung der Zahnmodelle kommen dabei bevorzugt Metalle in Frage, insbesondere Titan und Edelstahl, aber auch Keramikmaterialien. Aber auch gängige thermostabile Kunststoffe können verwendet werden. Für die Herstellung der Alveolarkamm-Modelle kommen insbesondere 3D-Druckmaterialien sowie Materialien, die für die Stereolithographie geeignet sind, in Frage.

Grundsätzlich soll jedoch festgehalten werden, dass für die Herstellung der Zahnmodelle prinzipiell solche Materialien in Frage kommen, mit denen sich - in Abhängigkeit der jeweils eingesetzten Verfahren - relativ höher auflösende Modelle erzeugen lassen, während für die Herstellung der Alveolarkamm-Modelle prinzipiell solche Materialien in Frage kommen, mit denen sich - in Abhängigkeit der jeweils eingesetzten Verfahren - relativ niedriger auflösende Modelle erzeugen lassen.

Anders ausgedrückt oder alternativ ist es vorteilhaft, wenn das Material des Alveolarkamm-Modell eine geringere Festigkeit, Härte und/oder Dichte als das Material des Zahnmodells aufweist. Dabei wird es als vorteilhaft angesehen, wenn die Härte, die Festigkeit und/oder die Dichte des Materials des Alveolarkamm-Modells zumindest um 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, und/oder 40% gegenüber der Festigkeit, der Härte bzw. der Dichte des Materials des Zahnteils geringer ist.

Das Alveolarkamm-Modell einerseits und die Zahnmodelle andererseits können zudem eine unterschiedliche Farbgebung aufweisen, und/oder auch aus verschiedenen Materialien gefertigt. So kann beispielsweise das Material des Alveolarkamm-Modell ein Polyurethanwerkstoff mit einer Dichte von 500 kg/m³ und das Material der Zahnmodelle ein Polyurethanwerkstoff mit einer Dichte von 1200 kg/m³ aufweisen. Die unterschiedliche Materialwahl führt zu einer erheblich höheren Verschleißfestigkeit der Zahnmodelle verglichen mit dem Alveolarkamm-Modell. Daher ist die Bearbeitungsgeschwindigkeit durch eine Fräsbearbeitung am Alveolarkamm-Modell aufgrund der geringeren Dichte sowie der geringeren Härte und Festigkeit des Materials des Alveolarkamm-Modell in einfacherer und vor allen Dingen schnellerer Art und Weise möglich.

Der erfindungsgemäße Ansatz,
- eine Reihe von Alveolarkamm-Modellen mit mindestens teils unterschiedlich ausgerichteten Kavitäten mit niedrigauflösenden CAM-Techniken herzustellen - was in einer entsprechend rauen Oberfläche der verschiedenen Alveolarkamm-Modelle resultiert
- lediglich die darin zu platzierenden Zahnmodelle mit einer hochauflösenden CAD-Technik herzustellen,
- dann die entsprechenden Setups durch sukzessives Platzieren der Zahnmodelle in die einzelnen Alveolarkamm-Modelle herzustellen und
- so die verschiedenen inkrementellen Aligner herzustellen
kombiniert also den Vorteil der hochauflösenden CAM-Technik für die Herstellung der Zahnmodelle mit der wirtschaftlicheren niedrigauflösenden CAM-Technik für die Herstellung der Alveolarkamm-Modelle, und ermöglichst so die wirtschaftliche Herstellung von optisch hochwertigen Alignern.

In einer bevorzugten Ausgestaltung der Erfindung umschließen die Kavitäten (12) des Alveolarkamm-Modells die verkürzte Zahnwurzel (14) der Zahnmodelle (13) passgenau.

Erfindungsgemäß wird die Bewegung der Zähne und der Zahnwurzeln während einer kieferorthopädischen Behandlung bewegen berechnet. Diese Informationen fließen mit in die erfindungsgemäßen Setups bzw. Alveolarkamm-Modelle und somit in die erfindungsgemäßen Aligner ein, da die erfindungsgemäßen Zahnmodelle zumindest eine verkürzte Zahnwurzel aufweisen, und der Alveolarkamm-Modell Kavitäten aufweist, die diese Zahnhälse und/oder Zahnwurzel passgenau umschließt. Daher können während der Behandlung mit den erfindungsgemäßen Alignern Komplikationen vermieden werden, die sich auf Grund einer geänderten Zahnstellung und sukzessive der Zahnwurzeln ergeben könnten.

Ferner ist bevorzugt vorgesehen, dass
a1) das virtuelle Manipulieren der Orientierung mindestens eines Zahns in dem virtuellen CAD-Modell des Ist-Zustands bzw. dem virtuellen CAD-Modell eines kieferorthopädischen Anfangs-, Übergangs- oder End-Korrekturzustands oder
a2) das virtuelle Manipulieren der Orientierung mindestens einer Kavität in dem ersten Alveolarkamm-CAD-Modell bzw. dem Alveolarkamm-CAD-Modell eines kieferorthopädischen Anfangs-, Übergangs- oder End-Korrekturzustands
bildschirmgestützt durch einen Bearbeiter oder durch einen vorgegebenen Algorithmus erfolgt.

Besonders bevorzugt ist vorgesehen, dass mindestens ein Alveolarkamm-Modell aus einem transparenten Material hergestellt wird. Hierfür können beispielsweise transparente Polymere wie Polymethylmethacrylat (PMMA) verwendet werden. Viele Anbieter von 3D-Druckern, wie beispielsweise ObjetGeometries oder 3D Systems (Polyjet), bieten transparente Printmaterialien für ihre Drucker an.

Bevorzugt ist dabei vorgesehen, die Alveolarkamm-Modelle, die dem kieferorthopädischen Istzustand, dem kieferorthopädischen Anfangs-Korrekturzustand und/oder dem kieferorthopädischen End-Korrekturzustand entsprechen, aus dem transparenten Material herzustellen.

Auf diese Weise lasst sich für eine Therapeuten und auch für eine Patienten neben der Korrektur der Zahnpositionen auch die Auswirkung der Korrekturtherapie auf die Positionen der Zahnwurzeln nachvollziehen.

Ferner ist erfindungsgemäß ein Kieferorthopädisches Setup bzw. ein Satz mehrerer Kieferorthopädischer Setups, hergestellt mit einem Verfahren gemäß einem der vorherigen Beschreibung.

Ebenso ist erfindungsgemäß ein Verfahren zur Herstellung mindestens eines kieferorthopädischen Aligners vorgesehen, wobei besagter Aligner durch Tiefziehen eines geeigneten Materials an einem kieferorthopädischen Setup gemäß der vorherigen Beschreibung hergestellt wird.

Hierzu werden beispielsweise transparente Folien mit Materialstärken zwischen 0,3 und 1,5 mm verwendet (sogenannte Tiefziehfolien), beispielsweise aus Polycarbonat (hartelastisch), Ethylenvinyl-Acetat-Copolymer (weichelastisch). Ferner kann auch eine laminierte Folie aus einer hart- und einer weichelastischen Schicht vorgesehen sein. Besonders bevorzugt sind jedoch Materialfolien mit einer Materialstärke zwischen 0,3 und 5 mm.

Mithilfe eines Tiefziehgerätes, beispielsweise der Firma Biostar, oder der Firma Erkodent, wird die Tiefziehfolie dann über den kieferorthopädischen Setup gezogen, um so einen Aligner herzustellen. Vorher wird der Setup ggf. mit einem Trennmittel besprüht.

In einer bevorzugten Ausführungsform weist der hergestellte Aligner (17) im Bereich des Alveolarkamm-Modells (18) eine höhere Rauigkeit auf, als der Teil des Aligners, der über die Zahnkronen (19) ausgeformt ist.

Tiefziehverfahren zur Herstellung von Positionern und Alignern an Kieferorthopädischen Setups sind dem Fachmann bereits aus Ponitz (1971) "Invisible Retainers", Am J Orthod 59: 266, aus McNamara (1993), "Orthodontic and Orthopedic Treatment in the Mixed Dentition", NeedhamPr,,sowie einer Vielzahl an anderen Publikationen bekannt.

Weitere, mit dem erfindungsgemäßen Verfahren herstellbare Vorrichtungen umfassen beispielsweise Lingual- und Vestibulärbrackets, Herbst Apparaturen, Transpalatal Arches, Quad-Helices, NanceholdingArches, Positioner, funktionelle herausnehmbare Apparatured (Aktivator, Bionatorusw), Crozat-Apparaturen, Retainer, Templates (Übertragungsschiene) für indirektesBonding (Kleben), MouthGuards (Sportschutzgerät), Schnarchchieneetc. Darüber hinaus ist erfindungsgemäß ein Aligner bzw. Satz von Alignern, hergestellt mit einem Verfahren der vorherigen Beschreibung vorgesehen.

### Abbildungen

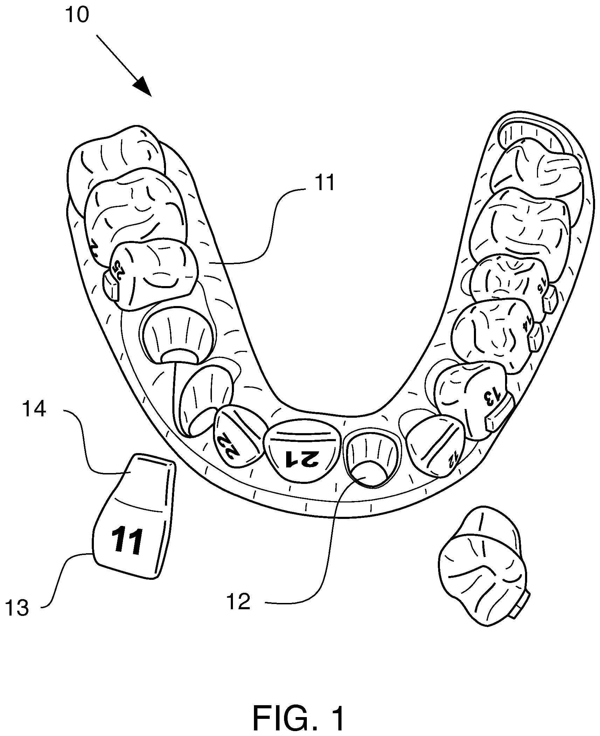

Fig. 1 zeigt ein Kieferorthopädisches Setup 10 gemäß der vorliegenden Erfindung. Der Setup weist ein Alevolarkamm-Modell 11, das Kavitäten 12 für die Aufnahme von Zahnmodellen 13 aufweist, sowie Zahnmodelle 13, die in besagtem Alevolarkamm-Modell 11 platziert werden können.

Die Zahnmodelle 13 weisen neben einer Zahnkrone 14a einen Zahnhals sowie eine vereinfacht ausgeführte Zahnwurzel 14 auf. Abweichend von der sehr vereinfachten Form der Zahnwurzeln in Fig. 1 können die Zahnwurzeln auch realitätsgetreuer ausgestaltet sein. In Bezug auf Vorteile dieser Ausgestaltung wird auf die Beschreibung verwiesen.

Die Kavitäten 12 in besagtem Alveolarkamm-Modell 11 sind in ihrer Form und/oder Ausrichtung so ausgestaltet, dass sie die Orientierung der betreffenden Zahnmodelle 13 in allen sechs Freiheitsgraden bestimmen.

Das Alveolarkamm-Modell 11 und die Zahnmodelle 13 sind mit Hilfe von CAM-Techniken hergestellt. Dabei wurden die Zahnmodelle 13 mit Hilfe eines relativ hochauflösenden CNC-Fräsverfahrens aus Titan hergestellt, während das Alveolarkamm-Modell 12 mit Hilfe eines relativ niedrig auflösenden 3D-Druckverfahrens hergestellt wurde. In Bezug auf Vorteile dieser Ausgestaltung wird auf die Beschreibung verwiesen.

Erfindungsgemäß können darüber hinaus auch mehrere Alveolarkamm-Modelle vorgesehen sein, die sich voneinander mindestens in der Form und/oder Ausrichtung einer Kavität unterscheiden. In Bezug auf Vorteile dieser Ausgestaltung wird auf die Beschreibung verwiesen.
Abweichend von
Fig. 1 kann mindestens ein Alveolarkamm-Modell 10 aus einem transparenten Material hergestellt sein. In Bezug auf Vorteile dieser Ausgestaltung wird auf die Beschreibung verwiesen.
   Die Zahnmodelle 13 sind numerisch markiert um eine reproduzierbare Anordnung in dem Alveolarkamm-Modell bzw. in den verschiedenen Alveolarkamm-Modellen zu gewährleisten.

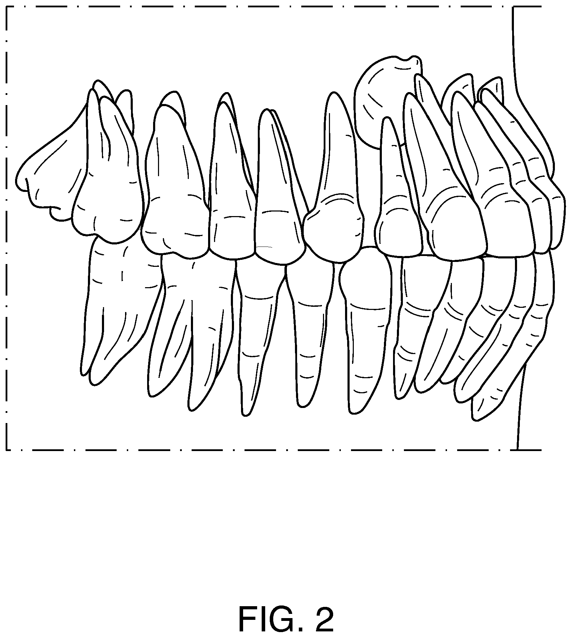

Fig. 2 zeigt ein virtuelles Modell, bei welchem ein virtuellen Modell des Ist-Zustands des Ober- oder Unterkiefers des Patienten mit einem virtuellen Modell der Zahnwurzeln des Patienten kombiniert ist. In Bezug auf Vorteile dieser Ausgestaltung wird auf die Beschreibung verwiesen.

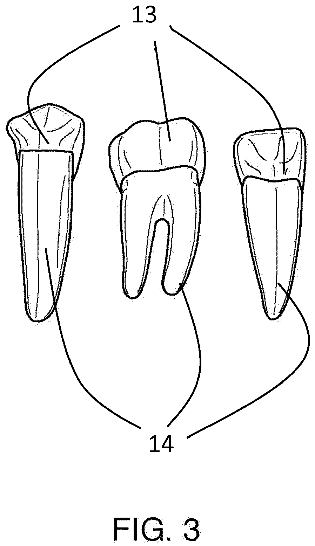

Fig. 3 zeigt Zahnmodelle, die im Unterscheid zu den in Fig. 1 gezeigten Zahnmodellen realitätsgetreuer ausgestaltete Zahnwurzeln aufweisen. In Bezug auf Vorteile dieser Ausgestaltung wird auf die Beschreibung verwiesen.

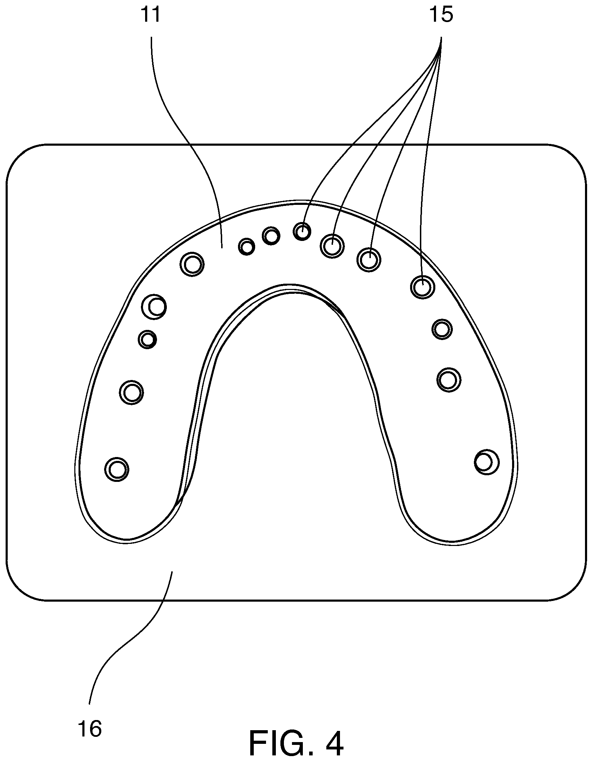

Fig. 4 zeigt die Unterseite eines Alveolarkamm-Modells 11 gemäß der vorliegenden Erfindung nach dem Tiefziehverfahren. Die Unterseite des Alveolarkamm-Modells 11, weist kreisförmige Ausnehmungen 15 aus, die mit den Kavitäten 12 verbunden sind. Die Tiefzeihfolie 16 umgibt das Alveolarkamm-Modell passgenau. Auf der nicht gezeigten Oberfläche des Alveolarkamm-Modells befinden sich die eingesetzten Zahnmodelle 13 wie in Fig.1 abgebildet. In Bezug auf Vorteile dieser Ausgestaltung wird auf die Beschreibung verwiesen.

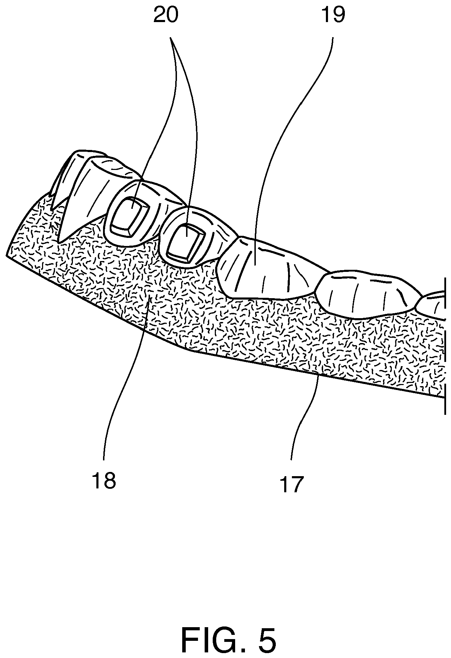

Fig. 5 zeigt einen Aligner 17 der mittels des erfindnungsgemäßen Verfahrens hergestellt wurde. Der obere Teil 19 des Aligners 17, der über Zahnmodelle 13 als Negativ tiefgezogen wurde, weißt eine sehr hohe Transparenz bzw. eine gute Oberflächenglattheit im direkten Vergleich mit dem Unteren Teil 18 auf. Zudem kann der Aligner Ausstülpungen 20 aufweisen, die Befestigungselemente (auch attachments genannt) wie in Fig. 1 dargestellt, umschließen. Der untere Teil 18 des Aligners 17 ist über dem Alveolarkamm- Modell, der das Zahnfleisch darstellt, tiefgezogen und weist eine leichte Struktur bzw. eine höhere sichtbare Rauigkeit gegenüber dem oberen Teil19auf. Wie zu erkennen, weist der Aligner an dem Übergang zwischen dem oberen 19 und dem unteren 18 Teil anatomisch ausgeformte Ränder auf; siehe diesbezüglich auch die Beschreibung.

## Patentansprüche

1. Verfahren zur Herstellung eines kieferorthopädischen Setups (10), aufweisend
a) Herstellen mindestens eines physischen Alveolarkamms-Modells (11) aus einem nicht porösen Kunststoffmaterial, wobei das physische Alveolarkamm-Modell (11) als ein Positivmodell eines Ober- und/oder Unterkiefers mit Zahnfleisch ausgestaltet ist, besagtes Alveolarkamm-Modell Kavitäten (12) für die Aufnahme von Zahnmodellen aufweist, und mindestens eine durchgängige Ausnehmung (15) in das Alveolarkamm-Modell (11) eingefügt wird,
b) Herstellen von Zahnmodellen (13), und die neben einer Zahnkrone einen Zahnhals sowie eine - ggf. vereinfacht ausgeführte - Zahnwurzel (14) aufweisen;
c) optional: Platzieren der Zahnmodelle (13) in besagtem Alveolarkamm-Modell.

2. Verfahren gemäß Anspruch 1, wobei im Schritt a) eine Vielzahl an Ausnehmungen (15) eingefügt werden.

3. Verfahren gemäß Anspruch 1 oder 2, wobei mindestens eine Kavität (12) in besagtem Alveolarkamm-Modell (11) in ihrer Form und/oder Ausrichtung so ausgestaltet ist, dass sie die Orientierung des betreffenden Zahnmodells (13) in allen sechs Freiheitsgraden bestimmt.

4. Verfahren gemäß einem der vorherigen Ansprüche, wobei das Verfahren die Herstellung mehrerer Alveolarkamm-Modelle (11) umfasst, die sich voneinander mindestens in der Form und/oder Ausrichtung einer Kavität (12) unterscheiden.

5. Verfahren gemäß einem der vorherigen Ansprüche, wobei das Verfahren die Herstellung
a) eines Alveolarkamm-Modells (11), das dem kieferorthopädischen Istzustand oder einem kieferorthopädischen Anfangs-Korrekturzustand entspricht,
b) optional eines oder mehrerer Alveolarkamm-Modelle (11), die einem oder mehreren kieferorthopädische Übergangs-Korrekturzuständen entsprechen, und/oder
c) eines Alveolarkamm-Modells (11), das einem kieferorthopädischen End-Korrekturzustand entspricht, umfasst.

6. Verfahren gemäß einem der vorherigen Ansprüche, wobei ein Alveolarkamm-Modell (11) hergestellt wird durch
a1) Anfertigen eines 3D-Scans eines Ausgusses, welcher Ausguss anhand einer Abformung des Ober- oder Unterkiefers eines Patienten mit einem geeignetem Material erhalten wird oder eines intraoralen Scans des Ober- und/oder Unterkiefers eines Patienten,
a2) optional separieren von mindestens einem Teil des Abguss und erneutes Anfertigen eines 3D-Scans des mindestens einem Teil des Abgusses,
b) Anfertigen eines virtuellen CAD-Modells des Ist-Zustands des Ober- oder Unterkiefers des Patienten,
wobei optional die Daten der 3D-Scans von Schritt a1 und a2 zu einem virtuellen CAD-Modell des Ist-Zustands des Ober- oder Unterkiefers des Patienten verrechnet werden, und
c) virtuelles Entfernen der in dem virtuellen CAD-Modell des Ist-Zustands repräsentierten Zähne nebst den dazugehörigen ggf. vereinfacht ausgeführten Zahnwurzeln, wobei in dem so erhaltenen ersten Alveolarkamm-CAD-Modell den entfernten Zahnwurzeln entsprechende Kavitäten generiert werden, und
d) Herstellen eines physischen Alveolarkamm-Modells (11) auf Basis des besagten ersten Alveolarkamm-CAD-Modells mittels einer CAM-Technik.

7. Verfahren gemäß Anspruch 6, wobei ferner mindestens ein modifiziertes Alveolarkamm-Modell (11) eines kieferorthopädischen Anfangs-, Übergangs- oder End-Korrekturzustands hergestellt wird durch
a1) Virtuelles Manipulieren der Orientierung mindestens eines Zahns in dem virtuellen CAD-Modell des Ist-Zustands, oder in einem modifizierten CAD-Modell eines Anfangs- oder Übergangs-Korrekturzustands, dergestalt, dass nach dem virtuellen Entfernen der in dem virtuellen CAD-Modell repräsentierten Zähne die Orientierung der betreffenden Kavität in dem so erhaltenen modifizierten Alveolarkamm-CAD-Modell geändert ist, oder
a2) Virtuelles Manipulieren der Form und/oder Ausrichtung mindestens einer Kavität in dem ersten Alveolarkamm-CAD-Modell, oder in einem modifizierten Alveolarkamm-CAD-Modell eines Anfangs- oder Übergangs-Korrekturzustands dergestalt, dass durch die Manipulation der Kavität in dem so erhaltenen modifizierten Alveolarkamm-CAD-Modell geändert die Orientierung des betreffenden Zahns geändert ist, und
b) Herstellen eines physischen modifizierten Alveolarkamm-Modells (11) auf Basis des besagten modifizierten Alveolarkamm-CAD-Modells mittels einer CAM-Technik.

8. Verfahren gemäß Anspruch 6 oder 7, wobei zusätzlich zu dem virtuellen CAD-Modell des Ist-Zustands des Ober- oder Unterkiefer des Patienten
a) mittels bildgebendem Verfahren ein CAD-Modell mindestens einer Zahnwurzel erzeugt und
b) besagtes CAD-Modell dem virtuellen CAD-Modell des Ist-Zustand des Ober- oder Unterkiefers des Patienten hinzugefügt wird.

9. Verfahren gemäß einem der Ansprüche -6 - 8, wobei sich an den Schritt des virtuellen Entfernens der in dem virtuellen CAD-Modell repräsentierten Zähne ein Schritt der Generierung, Überarbeitung und Speicherung mindestens eines Zahn-CAD-Modells eines so entfernten Zahns nebst der dazugehörigen ggf. vereinfacht ausgeführten Zahnwurzel (14) anschließt.

10. Verfahren gemäß Anspruch 9, ferner aufweisend den Schritt der Herstellung mindestens eines physischen Modells eines Zahns (13) nebst - ggf. vereinfacht ausgeführter - Zahnwurzel (14) auf Basis des besagten Zahn-CAD-Modells mittels einer CAM-Technik.

11. Verfahren gemäß einem der vorherigen Ansprüche, wobei mindestens ein Alveolarkamm-Modell (11) aus einem transparenten Material hergestellt wird.

12. Verfahren gemäß einem der vorherigen Ansprüche, wobei die Kavitäten (12) des Alveolarkamm-Modells die Zahnwurzel (14) der Zahnmodelle (13) passgenau umschließt.

13. Kieferorthopädisches Setup bzw. Satz mehrerer Kieferorthopädischer Setups, hergestellt mit einem Verfahren gemäß einem der vorherigen Ansprüche.

14. Verfahren zur Herstellung mindestens eines kieferorthopädischen Aligners (17), wobei besagter Aligner (17) durch Tiefziehen eines geeigneten Materials an einem kieferorthopädischen Setup (10) gemäß Anspruch 13 hergestellt wird.

15. Aligner (17) bzw. Satz von Alignern, hergestellt mit dem Verfahren gemäß dem vorherigen Anspruch.

## Claims

1. A method of producing an orthodontic setup (10) comprising
(a) preparing at least one physical alveolar crest model (11) from a non-porous plastic material, the physical alveolar crest model (11) being configured as a positive model of an upper and/or lower jaw with teethridge, said alveolar crest model comprising cavities (12) for receiving tooth models, and at least one continuous recess (15) being inserted into the alveolar crest model (11);
(b) preparing tooth models (13) and which comprise, in addition to a tooth crown, a tooth neck and a tooth root (14), wherein the tooth root may be of simplified design;
(c) optionally: positioning the tooth models (13) into said alveolar crest model.

2. The method according to claim 1, wherein in step (a) a plurality of recesses (15) are inserted.

3. The method according to claim 1 or 2, wherein at least one cavity (12) in said alveolar crest model (11) is configured to be of such a shape and/or orientation that it determines the orientation of the respective tooth model (13) in all six degrees of freedom.

4. The method according to any of the preceding claims, wherein the method comprises preparing a plurality of alveolar crest models (11) which differ from each other at least in the shape and/or orientation of a cavity (12).

5. The method according to any of the preceding claims, wherein the method comprises preparing
(a) an alveolar crest model (11) that corresponds to the current orthodontic condition or to an initial orthodontic correction condition,
(b) optionally, one or more alveolar crest models (11) corresponding to one or more transitional orthodontic correction states; and/or
(c) an alveolar crest model (11) corresponding to a final orthodontic correction state.

6. The method according to any of the preceding claims, wherein preparing an alveolar crest model (11) comprises
(a1) preparing a 3D scan of a spout, the spout being obtained from an impression of the upper or lower jaw of a patient using a suitable material, or from an intraoral scan of the upper and/or lower jaw of a patient;
(a2) optionally separating at least one portion of the casting and re-creating a 3D scan of the at least one portion of the casting;
(b) preparing a virtual CAD model of the current state of the patient's upper or lower jaw,
wherein optionally the data of the 3D scans of steps a1 and a2 are calculated to a virtual CAD model of the current state of the upper or lower jaw of the patient, and
(c) virtually removing the teeth represented in the virtual CAD model of the current state together with the associated tooth roots, wherein the tooth roots may be of simplified design, wherein cavities corresponding to the removed tooth roots are generated in the first alveolar crest CAD model thus obtained; and
(d) preparing a physical alveolar crest model (11) on the basis of said first alveolar comb CAD model by means of a CAM technique.

7. The method according to claim 6, further comprising producing at least one modified alveolar crest model (11) of an initial, a transitional or a final orthodontic correction state by
(a1) virtually manipulating the orientation of at least one tooth in the virtual CAD model of the current state, or in a modified CAD model of an initial or a transitional correction state, such that after virtually removing the teeth represented in the virtual CAD model, the orientation of the respective cavity in the modified alveolar crest CAD model thus obtained is changed; or
(a2) virtually manipulating the shape and/or the orientation of at least one cavity in the first alveolar crest CAD model, or in a modified alveolar crest CAD model of an initial or a transitional correction state, such that the orientation of the tooth concerned is changed by manipulating the cavity in the modified alveolar crest CAD model thus obtained; and
(b) preparing a modified physical alveolar crest model (11) based on said modified alveolar crest CAD model using a CAM technique.

8. The method according to claim 6 or 7, further comprising in addition to the virtual CAD model of the current state of the patient's maxilla or mandible, the following procedures
(a) preparing a CAD model of at least one root of a tooth by means of an imaging technique; and
b) adding said CAD model to the virtual CAD model of the current state of the patient's upper or lower jaw.

9. The method according to any of claims 6 - 8, wherein the step of virtually removing the teeth represented in the virtual CAD model is followed by a step of generating, revising and storing at least one tooth CAD model of a tooth and the associated tooth root (14) thus removed, wherein the tooth root may be of simplified design.

10. The method according to claim 9, further comprising the step of preparing at least one physical model of a tooth (13) together with an - optionally simplified - tooth root (14) on the basis of said tooth CAD model by means of a CAM technique.

11. The method according to any of the preceding claims, wherein at least one alveolar crest model (11) is made of a transparent material.

12. The method according to any of the preceding claims, wherein the cavities (12) of the alveolar crest model enclose the tooth root (14) of the tooth models (13) with an exact fit.

13. An orthodontic setup or a set of multiple orthodontic setups, produced by the method according to any of the preceding claims.

14. A method of manufacturing at least one orthodontic aligner (17), wherein said aligner (17) is produced by deep drawing a suitable material at an orthodontic setup (10) according to claim 13.

15. An aligner (17) or a set of aligners produced by the method according to the preceding claim.

## Revendications

1. Procédé, destiné à la fabrication d'un appareil orthodontique (10), comportant
a) la fabrication d'au moins un modèle physique de crête alvéolaire (11) en une matière plastique non poreuse, le modèle physique de crête alvéolaire (11) étant conçu sous la forme d'un modèle positif d'une mâchoire supérieure et/ou inférieure avec gencive, ledit modèle de crête alvéolaire comportant des cavités (12), destinées à recevoir des modèles dentaires et au moins un évidement (15) traversant étant inséré dans le modèle de crête alvéolaire (11),
b) la fabrication de modèles dentaires (13), qui hormis une couronne dentaire comportent un collet dentaire, ainsi qu'une racine dentaire (14) (réalisée le cas échéant, en version simplifiée) ;
c) en option : le placement des modèles dentaires (13) dans le modèle de crête alvéolaire cité.

2. Procédé selon la revendication 1, dans l'étape a) étant insérée une pluralité d'évidements (15).

3. Procédé selon la revendication 1 ou 2, au moins une cavité (12) dans le modèle de crête alvéolaire (11) cité étant conçue au niveau de sa forme et/ou de son alignement de telle sorte qu'elle définisse l'orientation du modèle dentaire (13) concerné dans tous les six degrés de liberté.

4. Procédé selon l'une quelconque des revendications précédentes, le procédé comprenant la fabrication de plusieurs modèles de crête alvéolaire (11) qui se différencient les uns des autres au moins par la forme et/ou l'alignement d'une cavité (12).

5. Procédé selon l'une quelconque des revendications précédentes, le procédé comprenant la fabrication
a) d'un modèle de crête alvéolaire (11), qui correspond à l'état orthodontique réel ou à un état de correction orthodontique initiale,
b) en option, d'un ou de plusieurs modèles de crête alvéolaire (11), qui correspondent à un ou à plusieurs états de correction orthodontique transitoire et/ou
c) d'un modèle de crête alvéolaire (11), qui correspond à un état de correction orthodontique finale.

6. Procédé selon l'une quelconque des revendications précédentes, un modèle de crête alvéolaire (11) étant fabriqué par
a1) élaboration d'un scanner en 3D d'un coulage, lequel coulage est obtenu à partir d'une empreinte de la mâchoire supérieure ou inférieure d'un patient, à l'aide d'une matière adaptée ou d'un scanner intra-oral de la mâchoire supérieure et/ou inférieure d'un patient,
a2) en option, séparation d'au moins une partie du moulage et élaboration réitérée d'un scanner en 3 D de l'au moins une partie du moulage,
b) élaboration d'un modèle CAO virtuel de l'état réel de la mâchoire supérieure ou inférieure du patient,
en option, les données des scanners en 3D des étapes a1 et a2 étant compensées en un modèle CAO virtuel de l'état réel de la mâchoire supérieure ou inférieure du patient et
c) retrait virtuel des dents représentées dans le modèle CAO virtuel de l'état réel, ainsi que des racines dentaires correspondantes, réalisées en version simplifiée le cas échéant, dans le premier modèle CAO de crête alvéolaire ainsi obtenu étant générées des cavités correspondant aux racines dentaires retirées et
d) fabrication d'un modèle physique de crête alvéolaire (11) sur la base du premier modèle CAO de crête alvéolaire cité, à l'aide d'une technique FAO.

7. Procédé selon la revendication 6, lors duquel il est fabriqué par ailleurs au moins un modèle de crête alvéolaire (11) modifié d'un état de correction orthodontique initiale, transitoire ou finale, par
a1) manipulation virtuelle de l'orientation d'au moins une dent dans le modèle CAO virtuel de l'état réel ou dans un modèle CAO modifié d'un état de correction initiale ou transitoire, de telle sorte qu'après le retrait virtuel des dents représentées dans le modèle CAO virtuel, l'orientation de la cavité concernée dans le modèle CAO de crête alvéolaire modifié soit changé ou
a2) manipulation virtuelle de la forme et/ou de l'alignement d'au moins une cavité dans le premier modèle CAO de crête alvéolaire ou dans un modèle CAO de crête alvéolaire modifié d'un état de correction initiale ou transitoire, de telle sorte que par la manipulation de la cavité dans le modèle CAO de crête alvéolaire modifié ainsi obtenu, l'orientation de la dent concernée soit changée et
b) fabrication d'un modèle de crête alvéolaire (11) physique modifié, sur la base du modèle CAO de crête alvéolaire modifié cité, à l'aide d'une technique FAO.

8. Procédé selon la revendication 6 ou 7, lors duquel, en supplément du modèle CAO virtuel de l'état réel de la mâchoire supérieure ou inférieure du patient,
a) on créé au moyen d'un procédé d'imagerie un modèle CAO d'au moins une racine dentaire et
b) on ajoute le modèle CAO cité au modèle CAO virtuel de l'état réel de la mâchoire supérieure ou inférieure du patient.

9. Procédé selon l'une quelconque des revendications 6 à 8, à l'étape du retrait virtuel des dents représentées dans le modèle CAO virtuel faisant suite une étape de la génération, de la révision et de la mémorisation d'au moins un modèle dentaire CAO d'une dent ainsi retirée, ainsi que de la racine dentaire (14) correspondante, réalisée le cas échéant en version simplifiée.

10. Procédé selon la revendication 9, comportant par ailleurs l'étape de la fabrication d'au moins un modèle physique d'une dent (13) ainsi que de la racine dentaire (14) correspondante (réalisée le cas échéant en version simplifiée), sur la base du modèle dentaire CAO cité, à l'aide d'une technique FAO.

11. Procédé selon l'une quelconque des revendications précédentes, au moins un modèle de crête alvéolaire (11) étant fabriqué en une matière transparente.

12. Procédé selon l'une quelconque des revendications précédentes, les cavités (12) du modèle de crête alvéolaire entourant précisément la racine dentaire (14) des modèles dentaires (13).

13. Appareil orthodontique ou jeu de plusieurs appareils orthodontiques, fabriqué à l'aide d'un procédé selon l'une quelconque des revendications précédentes.

14. Procédé, destiné à la fabrication d'un aligner orthodontique (17), l'aligner (17) cité étant fabriqué par emboutissage d'une matière adaptée sur un appareil orthodontique (10) selon la revendication 13.

15. Aligner (17) ou jeu d'aligners, fabriqué à l'aide d'un procédé selon la revendication précédente.
